# EUROPEAN PATENT APPLICATION

(11) **EP 2 007 160 A1**
(43) Date of publication of application: **24.12.2008**
(21) Application number: 07012010.0
(22) Date of filing: 19.06.2007
(51) Int. Cl.: H04Q 7/38

(54) **Method and device for performing a handover and communication system comprising such device**

(71) Applicant: Nokia Siemens Networks Oy, 02610 Espoo (FI)
(72) Inventor: Forsberg, Dan, 00210 Helsinki (FI); Li, Changhong, 02140 Espoo (FI); Punz, Gottfried Dr., 1080 Wien (AT); Wolfner, Gyorgy, 1144 Budapest (HU)
(74) Representative: Bruglachner, Thomas E.

(57) **Abstract**

A method and a device are provided for performing a handover of a first instance from a first network to a second network, the method comprising the steps of (a) a security transfer message is sent to a second instance (HSS, AAA Server); (b) the second instance processes security parameters; and (c) the second instance initiates an authentication based on the security parameters processed.

## Description

The invention relates to a method and to a device for performing a handover and a communication system comprising such a device.

According to document 3GPP TS 23.402 V1.0.0 (2007-05), the mobility management procedures specified to handle mobility between 3GPP and non 3GPP accesses shall include mechanisms to minimize the handover latency due to authentication and authorization for network access. This applies to User Equipments (UEs) either supporting simultaneous radio transmission capability or not supporting it.

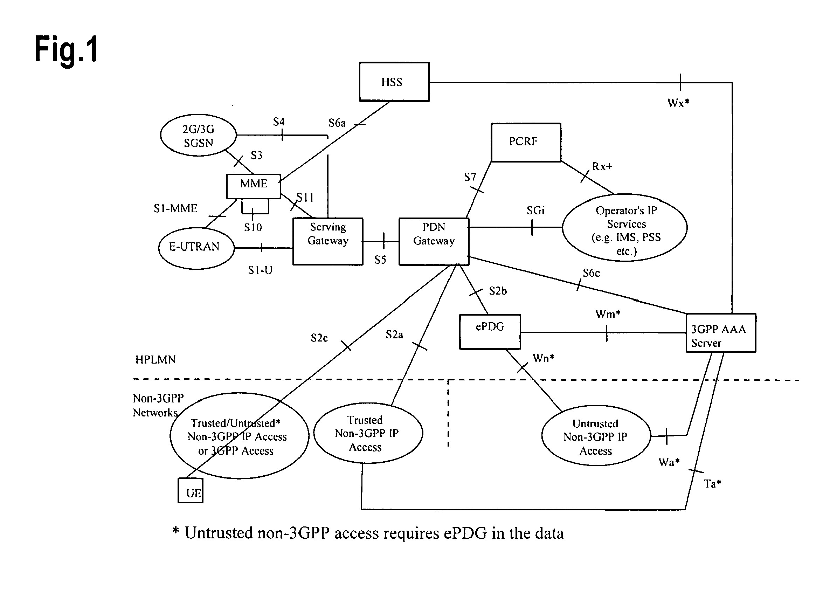

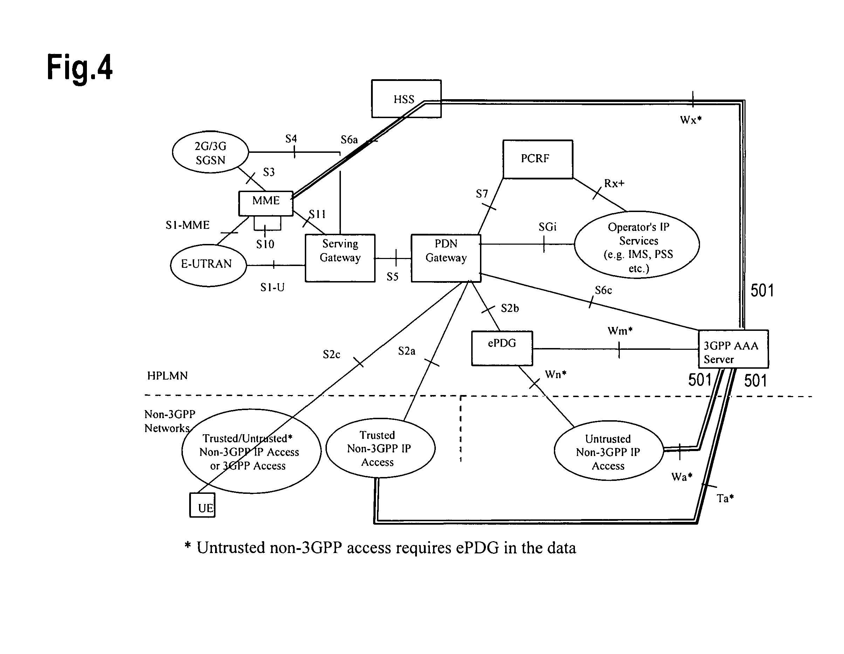

**Fig.1** corresponds to Fig.4.2.1-1 of 3GPP TS 23.402 visualizing a non-roaming architecture for non-3GPP accesses within an Evolved Packet System (EPS).

For a detailed description of Fig.1 reference is made to 3GPP TS 23.402, in particular in combination with the documents as cited therein.

Some of the reference points as shown in Fig.1 can be summarized as follows:
- S2a:: It provides the user plane with related control and mobility support between trusted non 3GPP IP access and a Gateway.
- S2b:: It provides the user plane with related control and mobility support between an Evolved Packet Data Gateway (ePDG) and the Gateway.
- S2c:: It provides the user plane with related control and mobility support between the UE and the Gateway. This reference point is implemented over trusted and/or untrusted non-3GPP Access and/or 3GPP access.
- S5:: It provides user plane tunneling and tunnel management between a Serving Gateway and a Packet Data Network Gateway (PDN GW). It is used for Serving GW relocation due to UE mobility and in case the Serving GW needs to connect to a non collocated PDN GW for the required PDN connectivity.
- S6a:: This interface is defined between a Mobility Management Entity (MME) and a Home Subscriber Server (HSS) for authentication and authorization.
- S6c:: It is the reference point between the PDN Gateway in the HPLMN and a 3GPP AAA server for mobility related authentication, if needed. This reference point may also be used to retrieve and request storage of mobility parameters.
- S7:: It provides transfer of (QoS) policy and charging rules from a PCRF to Policy and Charging Enforcement Point (PCEF).
- SGi:: It is the reference point between the PDN Gateway and the packet data network. Packet data network may be an operator external public or private packet data network or an intra operator packet data network, e.g. for provision of IMS services. This reference point corresponds to Gi and Wi functionalities and supports any 3GPP and non-3GPP access systems.
- Wa*:: It connects the Untrusted non-3GPP IP Access with the 3GPP AAA Server/Proxy and transports access authentication, authorization and charging-related information in a secure manner.
- Ta*:: It connects the Trusted non-3GPP IP Access with the 3GPP AAA Server/Proxy and transports access authentication, authorization, mobility parameters and charging-related information in a secure manner.
- Wm*:: This reference point is located between 3GPP AAA Server/Proxy and an Evolved Packet Data Gateway (ePDG) and is used for AAA signaling (transport of mobility parameters, tunnel authentication and authorization data).
- Wn*:: This is the reference point between the Untrusted Non-3GPP IP Access and the ePDG. Traffic on this interface for a UE initiated tunnel has to be forced towards ePDG.
- Wx*:: This reference point is located between 3GPP AAA Server and HSS and is used for transport of authentication data.

An approach to minimize handover latency for the target network access is to change the architecture as shown in Fig.1 and to provide new interfaces, e.g., between the Mobility Management Entity (MME) and the AAA-Server.

Such solution, however, disadvantageously leads to a tight interworking structure comprising complex interfaces with different security mechanism to cope with.

The **problem** to be solved is to overcome the disadvantages as stated before and to provide an approach that allows improved handover latency in particular in combination with existing 3GPP architecture.

This problem is solved according to the features of the independent claims. Further embodiments result from the depending claims.

In order to overcome this problem, a method for performing a handover of a first instance from a first network to a second network comprising the following steps:
(a) a security transfer message is sent to a second instance (HSS, AAA Server);
(b) the second instance processes security parameters;
(c) the second instance initiates an authentication based on the security parameters processed.

Hence, based on the security parameters processed at the second instance, the authentication of the handover can be achieved much faster than without such processing of security parameters.

This allows a significant reduction of handover latency.

In an embodiment, the method further comprises the steps:
- the first instance determines a deterioration of the connection to the first network;
- the first instance scans for further connections;
- the first instance requests a handover to the second network.

Hence, the first instance may recognize, e.g. a deterioration of a signal strength to the first network and hence it may initiate a handover to the second network that has been passively scanned by said first instance.

In another embodiment, the step (b) comprises:
- evaluating parameters in order to determine and/or obtain said security parameters;
- mapping of security parameters;
- derivation of security parameters;
- calculation of security parameters.

Hence, there are several possibilities to process security parameters. In particular, existing parameters (that have been negotiated for the connection with the first network) may be mapped to security parameters that can be utilized for the second network. This is in particular useful if the second network can be trusted.

In a further embodiment, the initiation of the authentication comprises at least a transfer of a security context, in particular an EAP success information.

Such information can be used to significantly simplify the handover process and hence to reduce latency time associated with such a handover process.

In a next embodiment, the first instance is of the following type:
- a user equipment;
- a mobile terminal;
- a mobile computer;
- a mobile network element.

The first instance may in particular be the user equipment (UE) initiating the handover as described, in particular the authentication based on the processed security parameters.

It is also an embodiment that the first network and/or the second network is of the following type:
- a WiMAX network;
- an I-WLAN network;
- a 3GPP access network;
- in general a trusted non-3GPP access network;
- in general a non-trusted non-3GPP access network.

Pursuant to another embodiment, the first network and the second network are of different type.

Hence, different possibilities of connections between (non) 3GPP access networks (trusted or non-trusted) can occur.

According to an embodiment, the security transfer message is sent from the first instance, in particular the user equipment. Furthermore, the security transfer message can be sent from a 3GPP access node, in particular if the handover should be executed from a 3GPP access network to a non-3GPP access network.

According to another embodiment, the security transfer message is a security context transfer message, in particular a security context transfer request.

A security context transfer message or request may comprise a target network and an identifier of a user equipment as parameters.

In yet another embodiment, the second instance is of the following type:
- an authentication, authorization and accounting server (AAA Server);
- a home subscriber server (HSS).

Both such components separately or in combination thereof may be utilized for processing security parameters as described herein. Furthermore, the second instance may then initiate a simplified authentication process and thereinafter the handover with reduced latency time.

The problem as stated above is also solved by a device for data processing comprising a processor unit that is arranged and/or equipped such that the method as described herein is executable on said processor unit.

Furthermore, the problem stated above can be solved by a device for initiating a handover of a first instance from a first network to a second network comprising a processor unit that is arranged such that the method as described herein can be run on said processor unit.

Moreover, the problem as stated supra is solved by a device for initiating a handover of a first instance from a first network to a second network comprising:
- a first unit for receiving a security transfer message;
- a second unit for processing security parameters;
- a third unit for initiating an authentication based on the security parameters processed.

It is to be noted that said first, second and third units may be functional entities that can be realized in various ways, i.e. as one or several block(s) of hardware and/or as one or several pieces of software running on one or more devices.

According to an embodiment, the device is
- an authentication, authorization and accounting server and/or
- a home subscriber server.

The problem stated above is also solved by a communication system comprising the device as described herein.

Embodiments of the invention are shown and illustrated in the following figures:
- Fig.2: shows a message sequence chart illustrating a handover from a 3GPP access network to a (non)-trusted non-3GPP access network;
- Fig.3: shows a message sequence chart illustrating a handover from a trusted non-3GPP access network to a 3GPP access network;
- Fig.4: shows a non-roaming architecture for non-3GPP access with an Evolved Packet System utilizing a path through the architecture for security context transfer from non-3GPP access networks to 3GPP access networks;
- Fig.5: shows a non-roaming architecture for non-3GPP access with an Evolved Packet System utilizing a path through the architecture for security context transfer from 3GPP access networks to non-3GPP access networks;
- Fig.6: shows a device for initiating an authentication, in particular for initiating a handover.

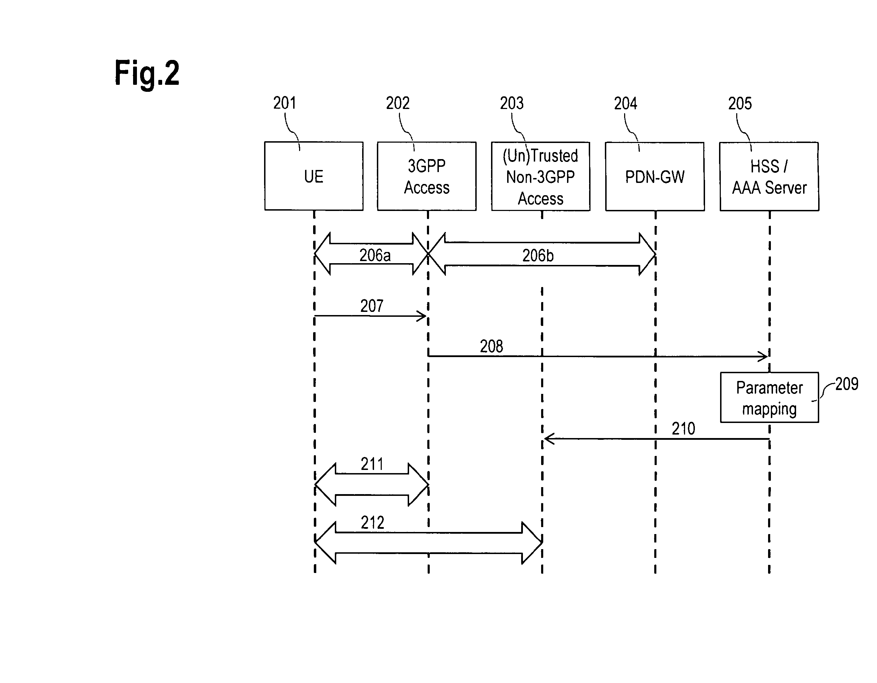

**Fig.2** shows a message sequence chart illustrating a handover from a 3GPP Access to a trusted non-3GPP Access. This Fig.2 is also applicable for the handover from a 3GPP Access to a non-trusted non-3GPP Access.

It is to be noted that the term "Access" herein also refers to an access network or to an access node.

Fig.2 comprises a User Equipment UE 201, the 3GPP Access 202, the Trusted Non-3GPP Access 203, a Packet Data Network Gateway PDN-GW 204 and a Home Subscriber Server HSS or an Authentication, Authorization and Accounting Server (AAA Server) 205.

Arrows 206a and 206b indicate that the User Equipment UE 201 is connected to the PDN-GW 204 and hence a connection via 3GPP access is established.

Sending a message 207 to the 3GPP Access 202, the User Equipment UE 201 indicates to the 3GPP Access 202 that a signal relating to the established connection deteriorates and that the User Equipment UE 201 wants to change the network connection. Hence, by sending this message 207 the User Equipment UE 201 may trigger a change of network thereby also indicating a destination network to which it wants to be handed over.

Prior to sending such message 207 the User Equipment UE 201 may (permanently) scan for other networks available. Such networks may be of different types, in particular 2G, 3G networks or Wireless LANs or Worldwide Interoperability for Microwave Access (WiMAX) networks, or any other access networks which are integrated with 3GPP's EPS.

A message 208 is sent from the 3GPP Access 202 to the HSS/ASS Server 205 requesting a security context transfer indicating a target network (TargetNet) and an identification or identifier of the User Equipment UE 201 (UE id). The message 208 can be as follows:
Sec Ctx Transfer (TargetNet, UE id)

A Mobility Management Entity MME (see Fig.1) transfers the security context to the HSS/AAA Server 205 via the PDN-GW 204. The HSS may in particular insert actual security vectors for the user of the AAA Server.

In a block 209, a parameter mapping, in particular a processing of security parameters is conducted. Such processing may comprise an evaluation of parameters in order to determine and/or to obtain security parameters, a mapping of (security) parameters, a derivation of security parameters or a calculation of security parameters.

The HSS/AAA Server 205 can use the vectors and/or key material provided for a fast re-authentication (e.g., fast Extensible Authentication Protocol for UMTS Authentication and Key Agreement (EAP-AKA) re-authentication) or no authentication (e.g., utilizing key material as provided, skipping an EAP authentication).

It is to be noted that such (re-)authentication can be network dependent and in particular separately predefined according to distinct networks.

A message 210 is sent from the HSS/AAA Server 205 to the trusted non-3GPP Access 202. The message may be as follows:
Sec Ctx Transfer (UE id, derived keys)
thereby indicating an identification of a User Equipment (here: the User Equipment UE 201) and derived keys as provided by the parameter mapping 209.

The derived keys may in particular be based on security vectors, e.g., a cipher key (CK), an integrity key (IK) or a key used in an LTE (K_{ASME}). Without (re)-authentication, security parameters may be sent to the target trusted non-3GPP Access 203 (if required) by an equivalent of an EAP-AKA success message including the key material.

An arrow 211 indicates that the User Equipment UE 201 detaches from the 3GPP Access 202.

An arrow 212 indicates that the User Equipment UE 201 attaches to the trusted non-3GPP Access (network) using the (same) security parameters as provided to the target trusted non-3GPP access network.

It is to be noted that no explicit synchronization is required, i.e. it is assumed that the detachment from 3GPP access and attachment to trusted non-3GPP access has in total a higher latency than the security context transfer.

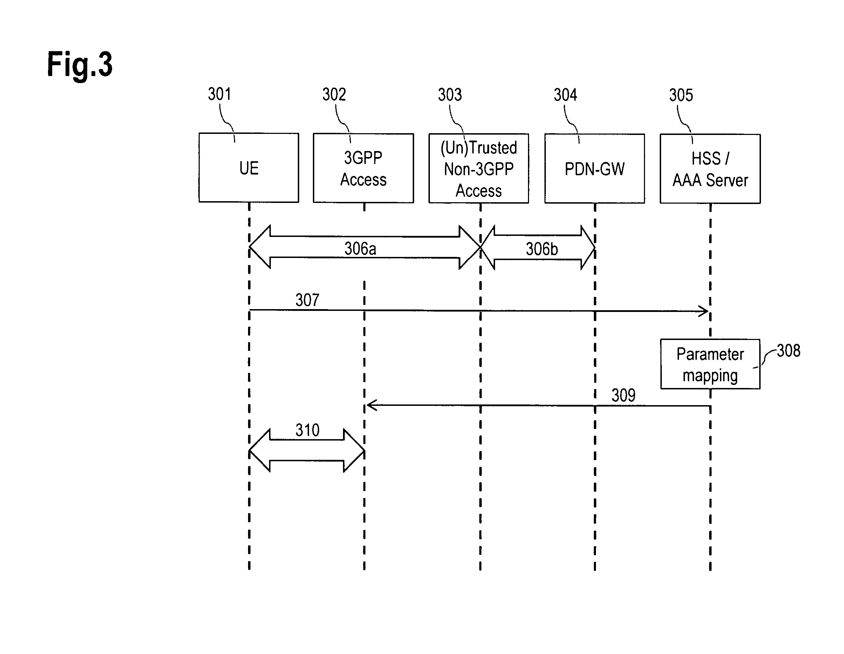

**Fig.3** shows a message sequence chart illustration of a handover from a trusted non-3GPP Access to a 3GPP Access, in particular an Evolved Universal Terrestrial Radio Access Network (E-UTRAN) and/or a Release 8 3GPP Access network.

Fig.3 comprises a User Equipment UE 301, the 3GPP Access 302, the Trusted Non-3GPP Access 303, a Packet Data Network Gateway PDN-GW 304 and a Home Subscriber Server HSS or an Authentication, Authorization and Accounting Server (AAA Server) 305.

Arrows 306a and 306b indicate that the User Equipment UE 301 is connected to the PDN-GW 304 and hence a connection with the trusted non-3GPP access is established.

In a message 307, the User Equipment UE 301 sends a
Sec Ctx Transfer Request (Target Network Id)
i.e., a security context transfer request message comprising a target network identification, to the HSS/AAA Server 305. Such message 307 can be in particular sent via non-3GPP access NW and subsequently via Ta* and/or Wa* reference points (see Fig.1); in this case a link specific message from the User Equipment UE 301 to the authenticator entity in the non-3GPP access network, e.g., an EAP message, may be used.

In a block 308 a parameter mapping, in particular a processing of security parameters is conducted. Such processing may comprise an evaluation of parameters in order to determine and/or to obtain security parameters, a mapping of (security) parameters, a derivation of security parameters or a calculation of security parameters.

The HSS/AAA Server 305 may obtain 3GPP security parameters based on an authentication vector that is currently used in the Trusted Non-3GPP Access network 303.

It is to be noted that the HSS/AAA Server 305 may be aware of the authentication vector that is currently being used - in particular if I-WLAN is utilized.

A message 309 is sent from the HSS/AAA Server 305 to the 3GPP Access 302, in particular to an MME, which is the authenticator in 3GPP access, as follows:
Sec Ctx Transfer (UE id, derived keys)
   thereby indicating an identification of a User Equipment (here: the User Equipment UE 301) and derived keys as provided by the parameter mapping 308. The MME is determined before by the HSS/AAA Server 306.

Based on the current authentication vector, the HSS may generate key material, e.g. a key used in an LTE (K_{ASME}) to be used in the Mobility Management Entity (MME). If such approach is not admissible, the authentication will have to be executed.

An arrow 310 indicates that the User Equipment UE 301 attaches to the 3GPP Access (network) using the security parameters as provided.

The MME and the User Equipment UE 301 may use the keys for further appliance in an LTE environment (e.g., AS and NAS specific keys may be derived).
**Fig.4** shows a non-roaming architecture for non-3GPP access with an Evolved Packet System utilizing a path 501 through the architecture for security context transfer from non-3GPP access networks to 3GPP access networks;

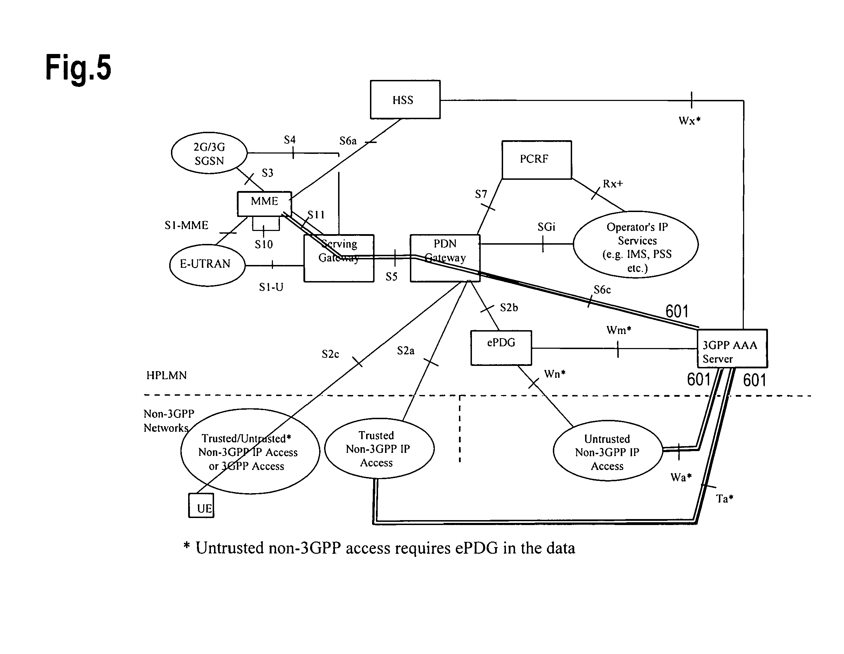

**Fig.5** shows a non-roaming architecture for non-3GPP access with an Evolved Packet System utilizing a path 601 through the architecture for security context transfer from 3GPP access networks to non-3GPP access networks;

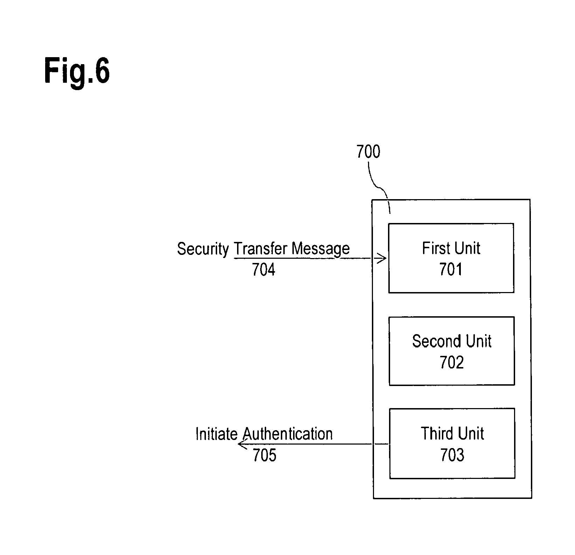

**Fig.6** shows a device for initiating an authentication, in particular within the process of the handover. Such a device 700 may in particular be an authentication, authorization and accounting server (AAA Server) and/or a home subscriber server (HSS).

The device 700 comprises a First Unit 701 for receiving a security transfer message 704 and a Second Unit 702 for processing security parameters. The device 700 further comprises a Third Unit 703 for initiating an authentication 705 based on the security parameters processed. Such authentication 705 may occur during execution of a handover thereby utilizing the security parameters processed and reducing the processing time required for the handover.

### Abbreviations (in alphabetical order):

- AAA: Authentication, Authorization and Accounting
- EAP: Extensible Authentication Protocol
- EAP-AKA: EAP for UMTS Authentication and Key Agreement
- ePDG: Evolved Packet Data Gateway
- EPS: Evolved Packet System
- E-UTRAN: Evolved UTRAN
- GW: Gateway
- HPLMN: Home Public Land Mobile Network
- HSS: Home Subscriber Server
- I-WLAN: Interworking WLAN
- MME: Mobility Management Entity
- PCEF: Policy and Charging Enforcement Function
- PCRF: Policy Control and Charging Rules Function
- PDN: Packet Data Network
- UE: User Equipment
- UTRAN: Universal Terrestrial Radio Access Network
- WiMAX: Worldwide Interoperability for Microwave Access
- WLAN: Wireless Area Network

## Claims

1. A method for performing a handover of a first instance from a first network to a second network comprising the following steps:
(a) a security transfer message is sent to a second instance (HSS, AAA Server);
(b) the second instance processes security parameters;
(c) the second instance initiates an authentication based on the security parameters processed.

2. The method according to claim 1, comprising the following steps prior to step (a):
- the first instance determines a deterioration of the connection to the first network;
- the first instance scans for further connections;
- the first instance requests a handover to the second network.

3. The method according to any of the preceding claims, wherein the step (b) comprises:
- evaluating parameters in order to determine and/or obtain said security parameters;
- mapping of security parameters;
- derivation of security parameters;
- calculation of security parameters.

4. The method according to any of the preceding claims, wherein the initiation of the authentication comprises at least a transfer of a security context, in particular an EAP success information.

5. The method according to any of the preceding claims, wherein the first instance is of the following type:
- a user equipment;
- a mobile terminal;
- a mobile computer;
- a mobile network element.

6. The method according to any of the preceding claims, wherein the first network and/or the second network is of the following type:
- a WiMAX network;
- an I-WLAN network;
- a 3GPP access network;
- in general a trusted non-3GPP access network;
- in general a non-trusted non-3GPP access network.

7. The method according to any of the preceding claims, wherein the security transfer message is sent from the first instance.

8. The method according to any of the preceding claims, wherein the security transfer message is sent from a 3GPP access node.

9. The method according to any of the preceding claims, wherein the security transfer message is a security context transfer message, in particular a security context transfer request.

10. The method according to any of the preceding claims, wherein the second instance is of the following type:
- an authentication, authorization and accounting server;
- a home subscriber server.

11. The method according to any of the preceding claims, wherein the first network and the second network are of different type.

12. A device for data processing comprising a processor unit that is arranged such that the method according of any of the preceding claims is executable on said processor unit.

13. A device for initiating a handover of a first instance from a first network to a second network comprising a processor unit that is arranged such that the method according to any of the claims 1 to 11 can be run on said processor unit.

14. A device for initiating a handover of a first instance from a first network to a second network comprising:
- a first unit for receiving a security transfer message;
- a second unit for processing security parameters;
- a third unit for initiating an authentication based on the security parameters processed.

15. The device according to any of claims 12 to 14, said device is
- an authentication, authorization and accounting server and/or
- a home subscriber server.

16. Communication system comprising the device according to any of claims 12 to 15.
